# EUROPÄISCHE PATENTANMELDUNG

(11) **EP 2 910 791 A1**
(43) Veröffentlichungstag der Anmeldung: **26.08.2015**
(21) Anmeldenummer: 15152067.3
(22) Anmeldetag: 22.01.2015
(51) Int. Cl.: F04D 19/04, F04D 29/02, F04D 29/048, H01F 7/02, H01F 41/02

(54) **Vakuumpumpe**

(30) Priorität: 21.02.2014 DE 102014102273
(71) Anmelder: PFEIFFER VACUUM GMBH, 35614 Asslar (DE)
(72) Erfinder: Koci, Bernd, 35641 Schöffengrund (DE)
(74) Vertreter: Manitz, Finsterwald & Partner GbR

(57) **Zusammenfassung**

Eine Vakuumpumpe, insbesondere Turbomolekularpumpe, umfasst eine um eine Rotationsachse (14) drehbare Rotorwelle (12) und wenigstens einen Magneten (1), insbesondere einen Permanentmagneten, wobei, bevorzugt, der Magnet (1) in einem Magnetlager (86) zur drehbaren Unterstützung der Rotorwelle (12) oder in einem Elektromotor (104) zum Antreiben der Rotorwelle (12) angeordnet ist, und wobei der Magnet (1) mit wenigstens einer Metallschicht (5) beschichtet ist.

## Beschreibung

Die vorliegende Erfindung betrifft eine Vakuumpumpe, insbesondere Turbomolekularpumpe, umfassend eine um eine Rotationsachse drehbare Rotorwelle.

Derartige Vakuumpumpen sind aus dem Stand der Technik bekannt. Derartige Vakuumpumpen weisen normalerweise Magnete und insbesondere Permanentmagnete auf, die zum Beispiel in einem Magnetlager zur drehbaren Unterstützung der Rotorwelle oder in einem Elektromotor, der als Antrieb für die Rotorwelle dient, vorgesehen sind. In einer Vakuumpumpe kann ein Magnet mit Wasserstoffgas in Kontakt kommen, das den Magneten angreifen und eine Versprödung verursachen kann. Zur Vermeidung einer derartigen Versprödung ist es bekannt, Magnete zu kapseln. Dabei umgibt eine Kapselung den Magneten in Art eines Gehäuses und schützt ihn so vor dem Wasserstoffgas. Der Magnet kann auch von einem Gehäuse geschützt werden, das um den Magneten herum gegossenen ist. Die Herstellung einer Kapselung bzw. das Gießen eines Gehäuses ist verhältnismäßig aufwändig und entsprechend kostspielig.

Der vorliegenden Erfindung liegt daher die Aufgabe zugrunde, eine einfach herzustellende Vakuumpumpe mit wenigstens einem Magneten bereitzustellen, der in einfacher und kostengünstiger Weise gegen Versprödung geschützt ist.

Die Aufgabe wird durch eine Vakuumpumpe mit den Merkmalen des Anspruchs 1 gelöst. Bevorzugte Weiterbildungen und Ausführungsformen der Erfindung werden in den abhängigen Ansprüchen beschrieben.

Erfindungsgemäß weist die Vakuumpumpe einen Magneten auf, der mit wenigstens einer Metallschicht beschichtet ist. Der Erfindung liegt somit der Gedanke zugrunde, bei der Vakuumpumpe den Magneten, insbesondere anstelle einer Kapselung oder eines Gehäuses, mit einer Schicht aus Metall zu versehen, durch die der Magnet vor einer durch Wasserstoffgas oder ein anderes Gas verursachbaren Versprödung geschützt ist.

Bei dem Magneten handelt es sich insbesondere um einen Magneten, der in der Vakuumpumpe in einem Magnetlager vorgesehen ist, das zur drehbaren Unterstützung der Rotorwelle dient, oder um einen Magneten, der in der Vakuumpumpe in einem Elektromotor zum Antreiben der Rotorwelle angeordnet ist. Bei den Magneten eines Magnetlagers bzw. eines Elektromotors einer Vakuumpumpe besteht die Gefahr, dass diese mit Wasserstoffgas bzw. mit Wasserstoffatomen oder einem anderen, eine Versprödung hervorrufenden Gas in Kontakt kommen, zum Beispiel wenn ein Prozessgas mit einem Anteil an Wasserstoffgas von der Vakuumpumpe gefördert wird. Erfindungsgemäß werden die Magnete beschichtet, so dass sie auf einfache und kostengünstige Weise vor einer Diffusion von Wasserstoffgas bzw. von Wasserstoffatomen und damit auch vor einer Versprödung geschützt sind.

Bevorzugt ist der Magnet mit wenigstens einer Kunststoffschicht beschichtet. Durch die Kunststoffschicht kann der Schutz vor Versprödung weiter verbessert werden. Dabei ist insbesondere vorteilhaft, dass sowohl die Metallschicht als auch die Kunststoffschicht in einfacher Weise auf den Magneten aufgebracht werden können und einen dauerhaften und effektiven Schutz bieten. Außerdem ist der Herstellungs- und Materialaufwand für eine Kapselung bzw. ein Gehäuse wesentlich größer, so dass im Vergleich dazu die Herstellung eines Magneten mit einer Metall- und einer Kunststoffschicht weniger kosten- und materialintensiv ist.

Die Metallschicht und/oder die Kunststoffschicht bedecken vorzugsweise eine Oberfläche des Magneten vollständig. Dadurch kann die gesamte Magnetoberfläche dauerhaft gegen Diffusion z.B. von Wasserstoffgas geschützt werden. Die Metallschicht und/oder die Kunststoffschicht können die Oberfläche des Magneten aber auch nur teilweise bedecken.

Bevorzugt ist die Kunststoffschicht oberhalb der Metallschicht vorgesehen. Dadurch kann die Metallschicht von der darüber liegenden Kunststoffschicht vor Beschädigung geschützt werden, beispielsweise während der Magnet in die Vakuumpumpe eingebaut wird.

Die Metallschicht kann Zinn, Wolfram, Gold, Silber und/oder Aluminium umfassen oder aus einem der genannten Metalle bestehen. Durch jedes der genannten Metalle kann ein guter Diffusionsschutz gegen Wasserstoffgas bzw. Wasserstoffatomen erreicht werden.

Bevorzugt ist die Metallschicht höchstens 60 Mikrometer, bevorzugt höchstens 50 Mikrometer, dick, wenn die Metallschicht Aluminium oder Zinn aufweist oder aus Aluminium oder Zinn besteht. Durch eine Zinn- oder Aluminiumschicht mit einer Dicke unterhalb der genannten Obergrenze kann ein effektiver und dauerhafter Schutz gegen Diffusion von Wasserstoffgas und somit auch vor einer Versprödung erreicht werden.

Vorzugsweise ist die Metallschicht höchstens 30 Mikrometer, bevorzugt höchstens 20 Mikrometer, dick, wenn die Metallschicht Wolfram, Silber oder Gold aufweist oder aus Wolfram, Silber oder Gold besteht. Durch eine Wolfram-, Silber- oder Goldschicht mit einer Dicke unterhalb der genannten Obergrenze kann ebenfalls ein effektiver und dauerhafter Schutz erreicht werden.

Die Kunststoffschicht kann ein Epoxidharz aufweisen oder daraus bestehen. Dadurch kann eine kostengünstige Schutzschicht hergestellt werden. Außerdem lässt sich das Epoxidharz in Form eines Epoxy-Sprühlacks aufsprühen, so dass die Kunststoffschicht einfach und effizient hergestellt werden kann.

Die Kunststoffschicht kann höchstens 60 Mikrometer, bevorzugt höchstens 50 Mikrometer, dick sein. Eine derartige Kunststoffschicht bietet normalerweise für Vakuumanwendungen einen ausreichenden Schutz vor Wasserstoffgas bzw. Wasserstoffatomen.

Vorteilhaft ist es, wenn die Metallschicht und/oder die Kunststoffschicht mindestens 5 Mikrometer, bevorzugt mindestens 10 Mikrometer und besonders bevorzugt mindestens 15 Mikrometer dick ist. Die beiden Schichten sind dadurch ausreichend dick, um den darunter liegenden Magneten zu schützen.

Besonders bevorzugt ist eine Metallschicht aus Zinn mit einer Schichtdicke von zumindest annähernd 13 Mikrometern und einer darüber liegenden Epoxy-Schicht von zumindest annähernd 20 Mikrometern. Dauertests unter Beaufschlagung von verschiedenen Drücken, Korrosion und/oder Versprödung verursachenden Gasen und Temperaturen haben gezeigt, dass ein derartig beschichteter Magnet eine ausreichende und dauerhafte Resistenz gegen Korrosion und Versprödung aufweist.

Besonders vorteilhaft ist es, wenn die Kanten des Magneten bearbeitet, insbesondere entgratet, entschärft, abgerundet, angefast, abgeschrägt und/oder angeschrägt, sind, da dann im Bereich der Kanten eine jeweilige gewünschte Schichtdicke für die Metallschicht und/oder die Kunststoffschicht besonders einfach realisiert werden kann.

Bei dem Magneten handelt es sich bevorzugt um einen Permanentmagneten. Der Magnet kann wenigstens ein magnetisches Material aufweisen. Dabei ist mit magnetischem Material dasjenige magnetisierte oder magnetisierbare Material gemeint, das bei einem Permanentmagneten das Magnetfeld erzeugt.

Das magnetische Material kann NdFeB oder SmCo, insbesondere SmCo₅ oder Sm₂Co₁₇, aufweisen oder aus NdFeB oder SmCo, insbesondere SmCo₅ oder Sm₂Co₁₇, bestehen. Dabei hat sich herausgestellt, dass NdFeB gegenüber Wasserstoffgas anfälliger ist als SmCo. Ferner hat sich gezeigt, dass Sm₂Co₁₇ gegenüber einer Versprödung resistenter ist als SmCo₅, das allerdings bereits eine zufriedenstellende Resistenz gegen Versprödung zeigt. Sm₂Co₁₇ wird daher bevorzugt als magnetisches Material eingesetzt.

Die Metallschicht und die Kunststoffschicht können auf dem magnetischen Material aufgebracht sein, insbesondere ohne dass zwischen dem magnetischen Material und den beiden Schichten noch eine weitere Schicht, eine Kapselung oder ein Gehäuse vorgesehen ist. Die beiden Schichten liegen somit unmittelbar über dem magnetischen Material. Eine Kapselung oder ein Gehäuse können somit eingespart werden.

Vorzugsweise handelt es sich bei der Vakuumpumpe um eine aktiv magnetgelagerte Turbomolekularpumpe, bei der das Magnetlager wenigstens einen aktiv gesteuerten bzw. steuerbaren Elektromagneten und wenigstens einen erfindungsgemäß beschichteten Permanentmagneten aufweist, der zum Beispiel zur Vormagnetisierung für Lagerstatoren des Magnetlagers vorgesehen ist.

Bei der Vakuumpumpe kann es sich auch um eine passive magnetgelagerte Turbomolekularpumpe handeln, bei der das Magnetlager wenigstens einen erfindungsgemäß beschichteten Permanentmagneten aufweist.

Ferner betrifft die Erfindung ein Verfahren zur Herstellung einer Vakuumpumpe, bei dem eine Oberfläche eines Magneten der Vakuumpumpe mit einer Metallschicht und bevorzugt zusätzlich mit einer Kunststoffschicht beschichtet wird. Vorzugweise wird der beschichtete Magnet in dem Magnetlager zur drehbaren Unterstützung der um die Rotationsachse drehbaren Rotorwelle oder in einem Elektromotor zum Antreiben der Rotorwelle angeordnet.

Bevorzugt wir die Metallschicht derart gebildet, dass sie Zinn, Wolfram, Gold, Silber und/oder Aluminium umfasst oder aus einem der genannten Metalle besteht.

Die Metallschicht wird insbesondere mit einer Dicke von höchstens 60 Mikrometer, bevorzugt höchstens 50 Mikrometer, ausgebildet, wenn sie Aluminium oder Zinn aufweist oder aus Aluminium oder Zinn besteht, oder, weiter insbesondere, die Metallschicht wird mit einer Dicke von höchstens 30 Mikrometer, bevorzugt höchstens 20 Mikrometer, ausgebildet, wenn die Metallschicht Wolfram, Silber oder Gold aufweist oder aus Wolfram, Silber oder Gold besteht.

Besonders vorteilhaft wird die Metallschicht galvanisch auf die Oberfläche des Magneten aufgebracht und die Kunststoffschicht wird auf die Metallschicht aufgesprüht. Dadurch kann die gesamte Oberfläche des Magneten herstellungstechnisch besonders einfach mit den beiden Schichten beschichtet werden.

Bevorzugt werden die Kanten des Magneten vor dem Beschichten bearbeitet, insbesondere entgratet, entschärft, abgerundet, angefast, abgeschrägt und/oder angeschrägt. Dadurch kann an den Kanten eine jeweilige gewünschte Schichtdicke für die Metallschicht und/oder die Kunststoffschicht besonders einfach realisiert werden.

Die Erfindung wird im Folgenden beispielhaft unter Bezugnahme auf die Zeichnungen beschrieben. Es zeigen, jeweils schematisch,
Fig. 1 eine geschnittene Ansicht einer Vakuumpumpe,
Fig. 2 ein stark vereinfachte geschnittene Ansicht eines Vakuumgeräts, und
Fig. 3 eine geschnittene Teilansicht eines Magneten.

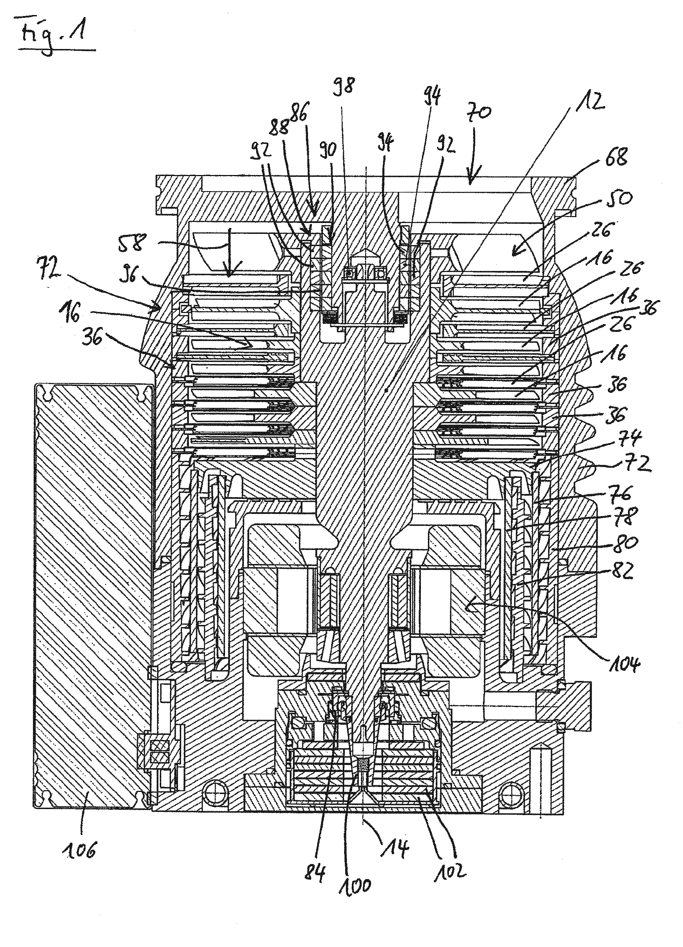

Die in Fig. 1 gezeigte Vakuumpumpe umfasst einen von einem Einlassflansch 68 umgebenen Pumpeneinlass 70 sowie mehrere Pumpstufen zur Förderung des an dem Pumpeneinlass 70 anstehenden Gases zu einem in Fig. 1 nicht dargestellten Pumpenauslass. Die Vakuumpumpe umfasst einen Stator mit einem statischen Gehäuse 72 und einen in dem Gehäuse 72 angeordneten Rotor mit einer um eine Rotationsachse 14 drehbar gelagerten Rotorwelle 12.

Die Vakuumpumpe ist als Turbomolekularpumpe ausgebildet und umfasst mehrere pumpwirksam miteinander in Serie geschaltete turbomolekulare Pumpstufen mit mehreren mit der Rotorwelle 12 verbundenen turbomolekularen Rotorscheiben 16 und mehreren in axialer Richtung zwischen den Rotorscheiben 16 angeordneten und in dem Gehäuse 72 festgelegten turbomolekularen Statorscheiben 26, die durch Distanzringe 36 in einem gewünschten axialen Abstand zueinander gehalten sind. Die Rotorscheiben 16 und Statorscheiben 26 stellen in dem Schöpfbereich 50 eine in Richtung des Pfeils 58 gerichtete axiale Pumpwirkung bereit.

Die Vakuumpumpe umfasst außerdem drei in radialer Richtung ineinander angeordnete und pumpwirksam miteinander in Serie geschaltete Holweck-Pumpstufen. Der rotorseitige Teil der Holweck-Pumpstufen umfasst eine mit der Rotorwelle 12 verbundene Rotornabe 74 und zwei an der Rotornabe 74 befestigte und von dieser getragene zylindermantelförmige Holweck-Rotorhülsen 76, 78, die koaxial zu der Rotationsachse 14 orientiert und in radialer Richtung ineinander geschachtelt sind. Ferner sind zwei zylindermantelförmige Holweck-Statorhülsen 80, 82 vorgesehen, die ebenfalls koaxial zu der Rotationsachse 14 orientiert und in radialer Richtung ineinander geschachtelt sind. Die pumpaktiven Oberflächen der Holweck-Pumpstufen sind jeweils durch die einander unter Ausbildung eines engen radialen Holweck-Spalts gegenüberliegenden radialen Mantelflächen jeweils einer Holweck-Rotorhülse 76, 78 und einer Holweck-Statorhülse 80, 82 gebildet. Dabei ist jeweils eine der pumpaktiven Oberflächen glatt ausgebildet - vorliegend diejenige der Holweck-Rotorhülse 76 bzw. 78 - und die gegenüberliegende pumpaktive Oberfläche der Holweck-Statorhülse 80, 82 weist eine Strukturierung mit schraubenlinienförmig um die Rotationsachse 14 herum in axialer Richtung verlaufenden Nuten auf, in denen durch die Rotation des Rotors das Gas vorangetrieben und dadurch gepumpt wird.

Die drehbare Lagerung der Rotorwelle 12 wird durch ein Wälzlager 84 im Bereich des Pumpenauslasses und ein Permanentmagnetlager 86 im Bereich des Pumpeneinlasses 70 bewirkt.

Das Permanentmagnetlager 86 umfasst eine rotorseitige Lagerhälfte 88 und eine statorseitige Lagerhälfte 90, welche jeweils einen Ringstapel aus mehreren in axialer Richtung aufeinandergestapelten permanentmagnetischen Ringen 92, 94 umfassen, wobei sich die Magnetringe 92, 94 unter Ausbildung eines radialen Lagerspalts 96 gegenüberliegen.

Innerhalb des Magnetlagers 86 ist ein Not- bzw. Fanglager 98 vorgesehen, welches als ungeschmiertes Wälzlager ausgebildet ist und im normalen Betrieb der Vakuumpumpe ohne Berührung leer läuft und erst bei einer übermäßigen radialen Auslenkung des Rotors gegenüber dem Stator in Eingriff gelangt, um einen radialen Anschlag für den Rotor zu bilden, der eine Kollision der rotorseitigen Strukturen mit den statorseitigen Strukturen verhindert.

Im Bereich des Wälzlagers 84 ist an der Rotorwelle 12 eine konische Spritzmutter 100 mit einem zu dem Wälzlager 84 hin zunehmenden Außendurchmesser vorgesehen, die mit zumindest einem Abstreifer eines mehrere mit einem Betriebsmittel, wie zum Beispiel einem Schmiermittel, getränkte saugfähige Scheiben 102 umfassenden Betriebsmittelspeichers in gleitendem Kontakt steht. Im Betrieb wird das Betriebsmittel durch kapillare Wirkung von dem Betriebsmittelspeicher über den Abstreifer auf die rotierende Spritzmutter 100 übertragen und infolge der Zentrifugalkraft entlang der Spritzmutter 100 in Richtung des größer werdenden Außendurchmessers der Spritzmutter 100 zu dem Wälzlager 84 hin gefördert, wo es zum Beispiel eine schmierende Funktion erfüllt.

Die Vakuumpumpe umfasst einen Antriebsmotor 104 zum drehenden Antreiben des Rotors, dessen Läufer durch die Rotorwelle 12 gebildet ist. Eine Steuereinheit 106 steuert den Motor 104 an. Die turbomolekularen Pumpstufen stellen in dem Schöpfbereich 50 eine Pumpwirkung in Richtung des Pfeils 58 bereit.

Bei der dargestellten Vakuumpumpe kann an den Einlassflansch 68 ein Rezipient angeschlossen werden, der mittels der Vakuumpumpe ausgepumpt werden kann. Dabei kann das aus dem Rezipienten herausgepumpte Gas korrosiv wirkende und/oder eine Versprödung bewirkende Anteile, wie etwa Wasserstoffgas oder Wasserstoff-Atome, umfassen, mit dem Teile des Permanentmagnetlagers 86 in Kontakt kommen können. Bei dem Permanentmagnetlager 86 können die Magnetringe 92, 94 zum Beispiel ein Material aus NdFeB oder SmCo, insbesondere SmCo₅ oder Sm₂Co₁₇, aufweisen, das von diesen Gasanteilen beschädigt werden kann. Zum Schutz der Magnetringe 92, 94 ist erfindungsgemäß die jeweilige Oberfläche des jeweiligen Magnetrings 92, 94 mit einer Metallschicht und bevorzugt zusätzlich mit einer über der Metallschicht liegenden Kunststoffschicht beschichtet (in Fig. 1 nicht gezeigt).

Bei der Metallschicht handelt es sich insbesondere um eine Schicht aus Zinn, Wolfram, Gold, Silber und/oder Aluminium und bei der Kunststoffschicht handelt es sich bevorzugt um eine Schicht aus Epoxidharz. Die Kombination aus einer Metallschicht und einer Kunststoffschicht bildet dabei eine Beschichtung, durch die der jeweilige Magnetring 92, 94 dauerhaft vor Versprödung bzw. vor einer Diffusion von Wasserstoffgas geschützt werden kann.

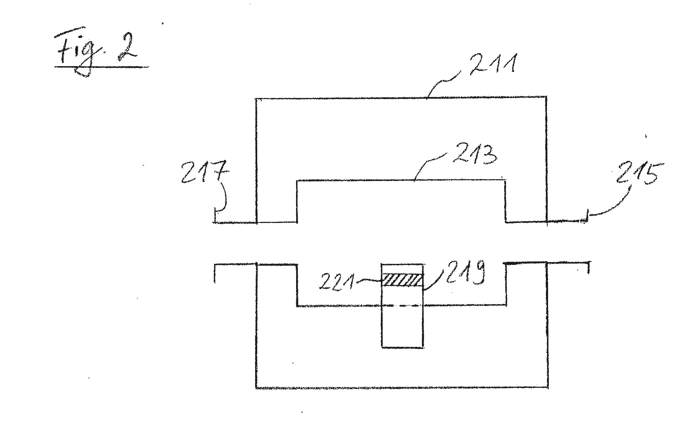

Das in Fig. 2 gezeigte Vakuumgerät umfasst ein äußeres Gehäuse 211, einen in dem Gehäuse 211 angeordneten evakuierbaren Bereich 213, der einen Einlassflansch 215 und einen Auslassflansch 217 aufweist.

An den Einlassflansch 215 kann beispielsweise ein Rezipient angeschlossen werden (nicht gezeigt). An den Auslassflansch 217 kann ferner eine Vakuumpumpe angeschlossen werden (ebenfalls nicht gezeigt). Der Rezipient kann dann mittels der Vakuumpumpe ausgepumpt werden, wobei das vom Rezipienten abgepumpte Gas durch den evakuierbaren Bereich 213 hindurchströmt. Im evakuierbaren Bereich 213 kann eine Komponente 219 des Vakuumgeräts angeordnet sein, die wenigstens einen Permanentmagneten 221 aufweist, der mit dem aus dem Rezipienten geförderten Gas in Kontakt gelangen kann. Zum Schutz des Magneten 221 vor Diffusion von Wasserstoffgas ist der Magnet mit einer Metallschicht, die Zinn, Wolfram, Gold, Silber und/oder Aluminium umfasst oder aus einem der genannten Metalle besteht, und bevorzugt zusätzlich mit einer Kunststoffschicht, die vorzugsweise aus einem Epoxy-Sprühlack besteht, beschichtet. Durch eine derartige Doppelschicht aus einem Metall und einem Kunststoff kann der Magnet 221 effektiv und dauerhaft z.B. vor Wasserstoffgas und vor Wasserstoffatomen geschützt werden.

Die Wasserstoffatome können dabei aus dem Wasserstoffgas entstehen, z.B. wenn zu Reinigungszwecken im Rezipienten eine Plasmazündung durchgeführt wird. Dabei diffundieren Wasserstoffatome noch leichter in ein Material hinein als Wasserstoffgas, so dass eine Versprödung durch Wasserstoffatome im Vergleich zu Wasserstoffgas noch stärker gefördert wird.

Bei dem Vakuumgerät kann es sich beispielsweise um ein Lecksuchgerät und bei der Komponente kann es sich beispielsweise um einen Elektromotor oder um eine eingebaute Vakuumpumpe handeln.

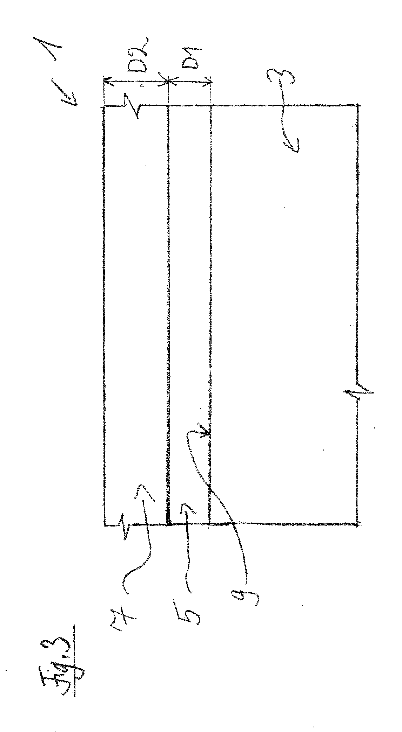

Der in Fig. 3 dargestellte Magnet 1 weist magnetisches Material 3, wie etwa NdFeB oder SmCo, insbesondere SmCo₅ oder Sm₂Co₁₇, auf, das mit einer Metallschicht 5 und einer über der Metallschicht liegenden Kunststoffschicht 7 beschichtet ist. Dabei bedecken die beiden Schichten 5, 7 die Oberfläche 9 des magnetischen Materials 3 vollständig.

Die Metallschicht kann Zinn, Wolfram, Gold, Silber und/oder Aluminium aufweisen oder aus einem der genannten Metalle bestehen. Die Metallschicht weist dabei eine Dicke D1 von höchstens 60 µm, bevorzugt höchstens 50 µm, auf, wenn die Metallschicht Aluminium oder Zinn aufweist oder aus Aluminium oder Zinn besteht. Wenn die Metallschicht Wolfram, Silber oder Gold aufweist oder aus Wolfram, Silber oder Gold besteht, so beträgt die Dicke D1 der Metallschicht 5 höchstens 30 µm, bevorzugt höchstens 20 µm. Die Mindestdicke der Metallschicht beträgt bevorzugt mindestens 5 µm, weiter bevorzugt mindestens 10 µm und besonders bevorzugt mindestens 15 µm.

Die Kunststoffschicht 7 wird bevorzugt aus einem Epoxidharz, insbesondere aus einem Epoxy-Sprühlack, gebildet. Dabei beträgt die Dicke D2 der Kunststoffschicht höchstens 60 µm, bevorzugt höchstens 50 µm. Ferner beträgt die Dicke D2 der Kunststoffschicht mindestens 5 µm, bevorzugt mindestens 10 µm und besonders bevorzugt mindestens 15 µm.

Besonders bevorzugt wird die Metallschicht aus Zinn mit einer Schichtdicke D1 von etwa 13 µm und einer darüber liegenden Epoxy-Schicht mit einer Dicke von etwa 20 µm gebildet. Ein derart zweifach beschichteter Magnet 1 weist eine ausreichende und dauerhafte Diffusionsresistenz gegenüber eindringend wirkenden Gasen auf, wie zum Beispiel Wasserstoffgas, die in einer Vakuumpumpe oder einem Vakuumgerät auftreten können. Der Magnet 1 kann durch die beiden Schichten 5, 7 somit dauerhaft vor Diffusion und Versprödung geschützt werden.

Dabei kann es vorteilhaft sein, wenn der Magnet 1 während des Betriebs der Vakuumpumpe zumindest zeitweise von einem Spülgas umspült wird. Das Spülgas reduziert die Wahrscheinlichkeit eines Kontakts zwischen Wasserstoffgas bzw. Wasserstoffatomen und der Oberfläche des Magneten und trägt somit zum Schutz des Magneten vor Diffusion und Versprödung bei.

Entsprechend den vorstehend beschriebenen Beispielen überdeckt die Kunststoffschicht die Metallschicht. Prinzipiell kann aber auch zuerst die Kunststoffschicht und dann die Metallschicht aufgetragen werden. Mehrere Metallschichten können auch übereinander beschichtet werden, wobei auf die Metallschichten noch eine Kunststoffschicht aufgetragen sein kann. Die Kunststoffschicht kann allerdings auch weggelassen werden.

Besonders bevorzugt kann der Magnet 1 bzw. die Oberfläche 9 des magnetischen Materials 3 dadurch beschichtet werden, dass zuerst die Metallschicht galvanisch auf die Oberfläche 9 aufgebracht und anschließend die Kunststoffschicht 7 als Epoxy-Sprühlack auf die Metallschicht 5 aufgesprüht wird.

Der Schichtaufbau mit der Metallschicht 5 und der Kunststoffschicht 7 bei dem Magneten 1 der Fig. 3 kann entsprechend bei jedem Magnetring 92, 94 der Vakuumpumpe der Fig. 1 bzw. bei dem Magneten 221 des Vakuumgeräts der Fig. 2 vorgesehen sein. Ein Magnet mit einem entsprechenden Schichtaufbau kann auch in den Antriebsmotor 104 der Vakuumpumpe der Fig. 1 integriert sein.

### Bezugszeichenliste

- 1: Magnet
- 3: magnetisches Material
- 5: Metallschicht
- 7: Kunststoffschicht
- 9: Oberfläche
- 12: Rotorwelle
- 14: Rotationsachse
- 16: Rotorscheibe
- 26: Statorscheibe
- 36: Distanzring
- 50: Schöpfbereich
- 58: Pfeil
- 68: Einlassflansch
- 70: Pumpeneinlass
- 72: Gehäuse
- 74: Rotornabe
- 76, 78: Holweck-Rotorhülse
- 80, 82: Holweck-Statorhülse
- 84: Wälzlager
- 86: Permanentmagnetlager
- 88: rotorseitige Lagerhälfte
- 90: statorseitige Lagerhälfte
- 92, 94: permanentmagnetischer Ring
- 96: radialer Lagerspalt
- 98: Fanglager
- 100: Spritzmutter
- 102: saugfähige Scheibe
- 104: Antriebsmotor
- 106: Steuereinheit
- 211: Gehäuse
- 213: evakuierbarer Bereich
- 215: Einlassflansch
- 217: Auslassflansch
- 219: Komponente
- 221: Magnet

## Patentansprüche

1. Vakuumpumpe, insbesondere Turbomolekularpumpe, umfassend eine um eine Rotationsachse drehbare Rotorwelle (12) und wenigstens einen Magneten (92, 94), insbesondere einen Permanentmagneten,
wobei, bevorzugt, der Magnet (1) in einem Magnetlager (86) zur drehbaren Unterstützung der Rotorwelle (12) oder in einem Elektromotor zum Antreiben der Rotorwelle (12) angeordnet ist, und wobei der Magnet (1) mit wenigstens einer Metallschicht (5) beschichtet ist.

2. Vakuumpumpe nach Anspruch 1,
**dadurch gekennzeichnet, dass**
der Magnet (1) mit wenigstens einer Kunststoffschicht (7) beschichtet ist.

3. Vakuumpumpe nach Anspruch 1 oder 2,
**dadurch gekennzeichnet, dass**
die Metallschicht (5) und/oder eine Kunststoffschicht (7) eine Oberfläche (9) des Magneten (1) vollständig bedecken.

4. Vakuumpumpe nach Anspruch 2 oder 3,
**dadurch gekennzeichnet, dass**
die Kunststoffschicht (7) oberhalb der wenigstens einen Metallschicht (5) vorgesehen ist.

5. Vakuumpumpe nach einem der vorhergehenden Ansprüche,
**dadurch gekennzeichnet, dass**
die Metallschicht (5) Zinn, Wolfram, Gold, Silber und/oder Aluminium umfasst oder aus einem der genannten Metalle besteht.

6. Vakuumpumpe nach einem der vorhergehenden Ansprüche,
**dadurch gekennzeichnet, dass**
die Metallschicht (5) höchstens 60 Mikrometer, bevorzugt höchstens 50 Mikrometer, dick ist, wenn die Metallschicht (5) Aluminium oder Zinn aufweist oder aus Aluminium oder Zinn besteht, oder
höchstens 30 Mikrometer, bevorzugt höchstens 20 Mikrometer, dick ist, wenn die Metallschicht (5) Wolfram, Silber oder Gold aufweist oder aus Wolfram, Silber oder Gold besteht.

7. Vakuumpumpe nach einem der vorhergehenden Ansprüche,
**dadurch gekennzeichnet, dass**
die Kunststoffschicht (7) ein Epoxidharz aufweist oder daraus besteht.

8. Vakuumpumpe nach einem der Ansprüche 2 bis 7,
**dadurch gekennzeichnet, dass**
die Kunststoffschicht (7) höchstens 60 Mikrometer, bevorzugt höchstens 50 Mikrometer, dick ist.

9. Vakuumpumpe nach einem der vorhergehenden Ansprüche,
**dadurch gekennzeichnet, dass**
die Metallschicht (5) und/oder eine Kunststoffschicht (7) mindestens 5 Mikrometer, bevorzugt mindestens 10 Mikrometer und besonders bevorzugt mindestens 15 Mikrometer dick ist.

10. Vakuumpumpe nach einem der vorhergehenden Ansprüche,
**dadurch gekennzeichnet, dass**
der Magnet (1) wenigstens ein magnetisches Material (3) aufweist.

11. Vakuumpumpe nach Anspruch 10,
**dadurch gekennzeichnet, dass**
das magnetische Material (3) NdFeB oder SmCo, insbesondere SmCo₅ oder Sm₂Co₁₇, umfasst oder aus NdFeB oder SmCo, insbesondere SmCo₅ oder Sm₂Co₁₇, besteht.

12. Vakuumpumpe nach Anspruch 10 oder 11,
**dadurch gekennzeichnet, dass**
die Metallschicht (5) und die Kunststoffschicht (7) auf dem magnetischen Material (3) aufgebracht sind, insbesondere ohne dass zwischen dem magnetischen Material (3) und den beiden Schichten (5, 7) noch eine weitere Schicht oder eine Kapselung vorgesehen ist.

13. Verfahren zur Herstellung einer Vakuumpumpe, insbesondere Turbomolekularpumpe, insbesondere nach einem der vorhergehenden Ansprüche, bei dem eine Oberfläche (9) eines Magneten (1) mit einer Metallschicht (5) und bevorzugt zusätzlich mit einer Kunststoffschicht (7) beschichtet wird, wobei, bevorzugt, der beschichtete Magnet (1) in einem Magnetlager (86) zur drehbaren Unterstützung einer um eine Rotationsachse drehbaren Rotorwelle (12) oder in einem Elektromotor zum Antreiben der Rotorwelle (12) angeordnet wird.

14. Verfahren nach Anspruch 13,
**dadurch gekennzeichnet, dass**
die Metallschicht (5) derart gebildet wird, dass sie Zinn, Wolfram, Gold, Silber und/oder Aluminium umfasst oder aus einem der genannten Metalle besteht, und,
bevorzugt, die Metallschicht (5) mit einer Dicke von höchstens 60 Mikrometer, bevorzugt höchstens 50 Mikrometer, ausgebildet wird, wenn sie Aluminium oder Zinn aufweist oder aus Aluminium oder Zinn besteht, oder, weiter bevorzugt, mit einer Dicke von höchstens 30 Mikrometer, bevorzugt höchstens 20 Mikrometer, ausgebildet wird, wenn die Metallschicht (5) Wolfram, Silber oder Gold aufweist oder aus Wolfram, Silber oder Gold besteht.

15. Verfahren nach Anspruch 13 oder 14,
**dadurch gekennzeichnet, dass**
zuerst die Metallschicht (5) galvanisch auf die Oberfläche (9) des Magneten (1) aufgebracht und anschließend die Kunststoffschicht (7) auf die Metallschicht (5) aufgesprüht wird.
